# FASCICULE DE BREVET EUROPEEN

(11) **EP 2 985 475 B1**
(45) Date de publication et mention de la délivrance du brevet: **09.05.2018**
(21) Numéro de dépôt: 15179403.9
(22) Date de dépôt: 31.07.2015
(51) Int. Cl.: F16B 2/24, F16B 5/06, F16B 21/08, F16B 17/00

(54) **SYSTÈME DE FERMETURE INDÉMONTABLE**
NICHT DEMONTIERBARES VERSCHLUSSSYSTEM
NON-DETACHABLE CLOSURE SYSTEM

(30) Priorité: 14.08.2014 FR 1401851
(43) Date de publication de la demande: 17.02.2016
(73) Titulaire: THALES, 92400 Courbevoie (FR)
(72) Inventeur: JOUET, Pierre, 49309 Cholet (FR); CALLEROT, Nadège, 49309 Cholet (FR); TISSIER, Victor, 49309 Cholet (FR)
(74) Mandataire: Dudouit, Isabelle

(56) Documents cités:
- WO-A1-2012/006481
- DE-A1-102008 042 759
- US-A1- 2012 087 066

## Description

L'invention concerne un système pour assembler deux pièces de façon à ce que l'ensemble ne puisse être démonté.

Il existe un besoin de rendre l'assemblage de deux pièces indémontable et de ne pas laisser apparent le système de fermeture. Différentes solutions pour l'assemblage de deux pièces existent dans l'art antérieur. La plupart des solutions connues utilisent des vis, des écrous, etc.

La demande de brevet WO 2007/085881 décrit un système pour assembler rapidement deux pièces. Le principe consiste notamment à insérer un premier élément solidaire de la première pièce dans une ouverture du deuxième élément et à bloquer l'ensemble au moyen d'un élément de blocage adapté. Les deux pièces sont ainsi bridées l'une par rapport à l'autre. Ce montage nécessite un élément accessible de l'extérieur pour le maintien en position des deux parties et il suffit d'ôter cet élément extérieur pour démonter l'ensemble.

Le document WO 2012/006481 décrit un système de fixation rapide de deux éléments qui est accessible une fois les éléments réunis.

La demande de brevet DE 10 2008 042 759 concerne une pince de fixation d'un palier fixe au sein d'un moteur.

L'idée de la présente invention repose sur une nouvelle approche qui ne nécessite pas l'utilisation d'un élément extérieur et qui permet de rendre invisible le système de fermeture.

On utilise dans la description l'expression « moyen de verrouillage » ou « clip » pour désigner le même objet.

L'invention concerne un système non démontable comprenant au moins une première pièce et une deuxième pièce caractérisé en ce que :
- la première pièce comporte au moins deux ouvertures,
- la deuxième pièce comporte au moins deux moyens de verrouillage, un moyen de verrouillage est composé d'une partie ayant une forme de « S » allongé, la dimension d'un moyen de verrouillage étant adaptée à une ouverture dans laquelle il va s'insérer au cours d'un mouvement de translation de la première pièce par rapport à la deuxième pièce,
   une branche du premier moyen de verrouillage étant disposée d'un côté d'une ligne As et une branche du deuxième moyen de verrouillage étant disposée du côté opposé par rapport à cette ligne, afin d'assurer le blocage des deux pièces en position de verrouillage, les moyens de verrouillage étant à l'intérieur du volume formé par les deux pièces assemblées et inaccessibles de l'extérieur. La première pièce est, par exemple, une coque comprenant un repli de maintien et la deuxième pièce est une coque comprenant sur au moins une de ses parois au moins deux moyens de verrouillage.

La deuxième pièce est une coque qui comprend, par exemple, une paroi comprenant une bande, au moins deux pattes solidaires de la bande, deux pattes étant séparées d'une distance dc, chacune des pattes comprenant un évidement afin de former un clip.

Le système comporte, par exemple :
- une patte comprenant un bord droit, un bord gauche, un bord inférieur, un bord supérieur,
- un évidement en forme de « U » à l'envers délimité par un premier bord supérieur, un bord inférieur suivant la forme des branches du U, un premier bord droit, un deuxième bord milieu droit, un premier bord gauche, un deuxième bord milieu gauche.

D'autres caractéristiques et avantages de la présente invention apparaîtront mieux à la lecture de la description qui suit d'un exemple de réalisation donné à titre illustratif et nullement limitatif, annexé des figures qui représentent :
- La figure 1, une vue d'ensemble du système indémontable,
- La figure 2, un détail du positionnement des deux parties et des clips permettant l'assemblage,
- La figure 3, un détail des moyens de verrouillage,
- La figure 4, la disposition et la dimension des ouvertures associées aux moyens de verrouillage.

On utilise le mot coque pour désigner une pièce qui comprend un fond et une paroi formant un bord.

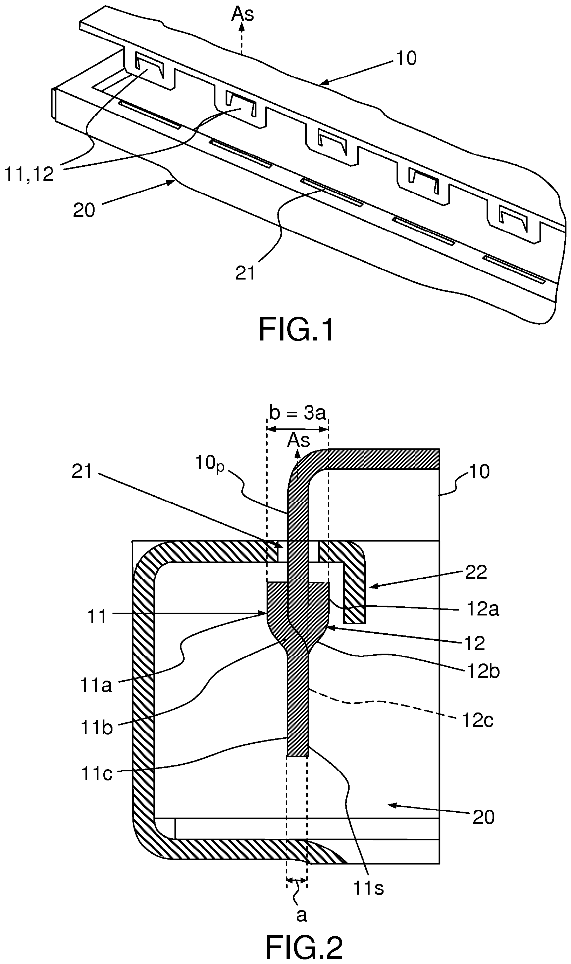

La figure 1 représente un exemple d'assemblage d'une coque supérieure 10 à emboîter dans une coque inférieure 20 de façon à les verrouiller et à empêcher le démontage sans abimer le système. Dans cet exemple, la coque supérieure est pourvue de plusieurs moyens de verrouillage 11, 12 formés en partie par le matériau constituant la coque et comprenant des clips (figure 2) disposés de part et d'autre d'un axe As sensiblement vertical sur la figure, qui correspond aussi à un axe passant par les ouvertures 21 pratiquées dans la coque inférieure 20, qui peut être, mais pas nécessairement un axe de symétrie. L'assemblage des deux coques 10, 20 sera réalisé par l'utilisation d'au moins un couple de moyens de verrouillage 11, 12, comme il va être explicité ci-après.

La figure 2 est une vue en coupe de l'assemblage des deux coques de la figure 1 assemblées.

Sur cette figure 2, la coque inférieure 20 comporte un retour de pli de tôle 22 qui permet de lui assurer une certaine rigidité, malgré la présence d'ouvertures 21 qui peuvent être proches les unes des autres et qui reçoivent les moyens de verrouillage ou clips.

La coque supérieure 10 comprend les moyens de verrouillage ou clips 11, 12 que l'on différencie pour l'explication, selon que les clips 11, 12 sont positionnés à gauche de l'axe As lorsque l'on regarde la vue en coupe ou à droite de ce même axe. Les moyens de verrouillage dans cet exemple sont formés au niveau d'une paroi 10p de la coque.

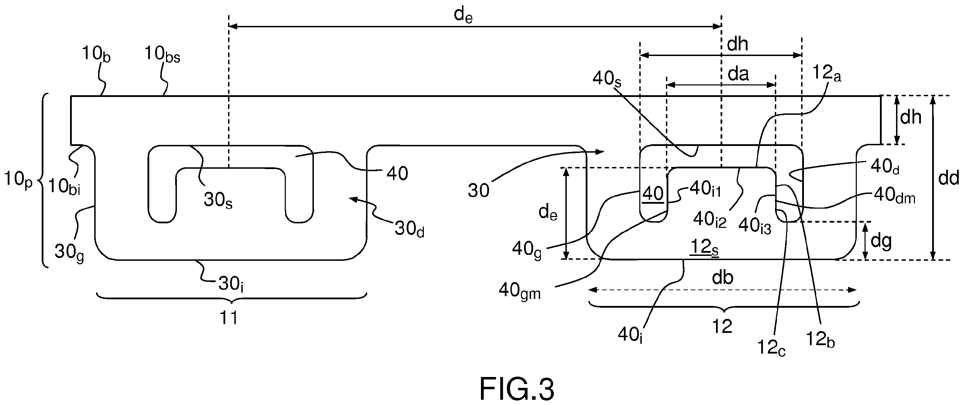

Ainsi, un moyen de verrouillage 11 ayant une forme de « S » allongé comporte, par exemple, une première partie 11a, une deuxième partie 11b, et une troisième partie 11c solidaire d'une partie support 11s elle-même solidaire de la coque supérieure 10. Une fois les deux coques assemblées, les éléments constituant un moyen de verouillage se retrouvent à l'intérieur du volume formé par les deux coques assemblées et de fait ne sont pas accessibles de l'extérieur. Dans cet exemple, on a choisi de décomposer en trois parties le clip en forme de « S » pour l'explication à titre d'exemple. Le moyen de verrouillage 12 aura aussi une forme de «S» allongé composé d'une première partie 12a, d'une deuxième partie 12b, d'une troisième partie 12c solidaire d'une partie support 12s (non représentée pour des raisons de simplification) elle-même solidaire de la paroi de la coque supérieure (figure 3) pourvue du clip.

Une fois les deux parties assemblées ceci permet d'avoir un blindage électromagnétique CEM dans le cadre d'une utilisation avec des éléments électroniques à l'intérieur.

La figure 3 schématise un exemple d'un ensemble de deux clips voisins. La base d'un clip présente une forme sensiblement arrondie pour les bords afin de faciliter son passage dans une ouverture 21. Les deux moyens de verrouillage 11, 12, représentés ont leur partie 11a, 11b, 12a, 12b disposées de part et d'autre d'une ligne As une fois sur deux (quinconce) comme il est représenté sur la figure 2.

La figure 3 explicite la forme et les dimensions des clips. La paroi 10p de la coque 10 dans laquelle vont être réalisés les moyens d'accrochage 11, 12 peut être décomposée en une bande 10_{b} comportant un premier bord supérieur 10_{bs}, un deuxième bord inférieur 10_{bi}. La bande comprend plusieurs pattes 30 espacées d'une distance dc l'une de l'autre, lorsque l'on considère le milieu d'une patte, chaque patte comprend un bord droit 30d et un bord gauche 30_{g}, un bord inférieur 30ᵢ et un bord supérieur 30ₛ, qui se confond avec la partie inférieure de la bande. Un évidement 40 en forme de « U » à l'envers va permettre de former un clip 11, 12. L'évidement 40 est délimité par premier bord supérieur 40ₛ, un bord inférieur 40ᵢ composé de trois parties 40ᵢ₁, 40ᵢ₂, 40ᵢ₃ suivant la forme des branches du U, dans cet exemple, un premier bord droit 40_{d}, un deuxième bord milieu droit 40_{dm}, un premier bord à gauche 40_{g}, un deuxième bord milieu gauche 40_{gm} lorsque l'on est face à la figure 3. Les bords de la forme en U sont arrondis pour faciliter la manipulation du clip 11 et sa mise en place. Le clip 11 peut être formé par une découpe au laser de la patte correspondant sensiblement à l'évidement en forme de U ou toute autre découpe permettant de le garder solidaire de la patte.

Un exemple de dimension et de relation entre les différents éléments formant le clip est donné à la figure 3 à titre illustratif, sans pour autant limiter la portée de l'invention.

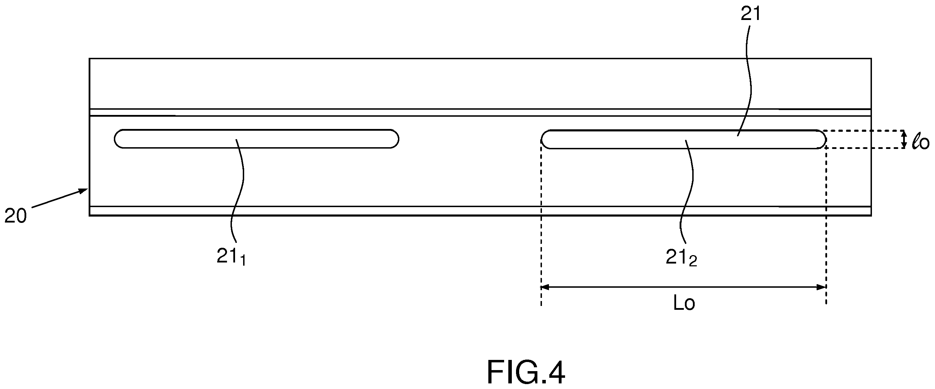

Pour les dimensions/relations entre les éléments constituant l'objet de l'invention, il est possible de choisir les relations suivantes:
soit a = l'épaisseur de la tôle,
b= 3 x épaisseur de la tôle,
da = dh x 0.7: distance entre le bord milieu droit 40dm et le bord milieu gauche 40gm de l'évidement en forme de U,
db = a x 25: distance entre le bord gauche 30g et le bord droit 30d de la patte 30 supportant le clip 11,
dc = db x 2 : distance entre le milieu d'un premier clip 11 et le milieu d'un deuxième clip 12 voisin,
dd = db x 0.6 : distance entre le bord supérieur 10bs de la bande 10b et le bord inférieur 30i de la patte 30,
de = db x 0.35: distance entre le bord inférieur 30i de la patte 30 et le bord supérieur 11sdu clip,
df = db x 0.18 : la hauteur de la bande 10b entre 10bi et 10bs,
dg = db x 0.14: hauteur de la patte formant le support du clip en forme de "S" entre 30i et 40i₁ ou 40i₂,
dh = db x 0.6 : distance entre le premier bord droit 40d et le deuxième bord gauche 40g de l'évidement,
Lo = db x 1.2: distance entre le bord gauche 21g et le bord droit 21d de la fente 21 recevant le clip, figure 4,
lo = a x 2 : largeur de la fente recevant le clip.

La partie supérieure 11a, 12a d'un clip sert à empêcher le mouvement d'ouverture, selon un axe en Z, lorsque les deux coques sont assemblées. L'épaisseur « a » d'un clip est, par exemple, égale à l'épaisseur de la tôle utilisée pour former le moyen de verrouillage. La valeur de l'épaisseur est choisie aussi pour permettre le passage du clip dans une ouverture 21 et de fait est inférieure à la largeur d'une ouverture.

Pour des relations simplifiées il est possible de choisir les relations suivantes : a =épaisseur tôle, b=3a, une largeur ouverture l0=2a (figure 4).

Par exemple, on peut envisager de choisir la longueur pour 11a+11b sensiblement égale à la valeur de la partie 11c.

La deuxième partie 11b, 12b d'un clip se déforme ponctuellement pour permettre le passage dans une ouverture 21 de la coque inférieure 20.

La troisième partie 11c, 12c d'un clip, base de la fonction clip sert au guidage lors de l'insertion du clip dans l'ouverture de la pièce.

La figure 4 représente une vue de dessus de la coque inférieure 20 avec une première ouverture 21₁ pour le passage du premier clip 11 et une deuxième ouverture 21₂ pour le passage du deuxième clip 12. Une ouverture possède une largeur lₒ et une longueur Lₒ qui sont choisies en fonction de l'épaisseur d'un clip et de la largeur d_{b} d'un clip. L'ouverture dans cet exemple a une forme oblongue pour faciliter le passage d'un clip. La dimension lₒ est égale par exemple à deux fois l'épaisseur a de la tôle utilisée pour former un clip. Le retour de pli 22 a notamment pour fonction de rigidifier la coque inférieure au niveau d'une ouverture, cette dernière pouvant se trouver très proche du bord et risquer de se déformer lors de l'insertion de la pièce supérieure ou encore la distance entre deux ouvertures pouvant être faible.

Si l'on se réfère à la figure 1, lors de l'assemblage de la première coque avec la deuxième coque, le premier moyen de verrouillage 11 et le deuxième moyen de verrouillage 12 viennent s'insérer dans l'ouverture 21₁ et l'ouverture 21₂ en rapprochant les deux pièces selon un mouvement de translation, V, par exemple vertical ou horizontal en fonction de la position des coques à assembler, ou de manière générale sensiblement parallèle au mouvement avec lequel on déplace les deux coques pour les assembler. Les parties 11a, 11b, 12a, 12b des formes en « S » vont se rapprocher vers l'axe As, le moyen de verrouillage prend alors une forme sensiblement droite, puis lorsque les deux coques se touchent les clips reprennent leur forme de « S » allongé. En position fermée, figure 2, on voit que la partie 11a du clip 11 se trouve non plus face à l'ouverture 21₁, mais en dessous de la paroi de la coque supérieure. Il en est de même pour le deuxième clip, les clips se trouvant à l'intérieur du volume formé par les deux coques assemblées.

Le nombre et la répartition des moyens de verrouillage, de clips sera choisi en fonction des pièces à assembler.

Les clips sont dans cet exemple réalisés dans le même matériau que celui de la coque ou de l'enveloppe. Il sera possible d'utiliser un matériau qui se déforme lors du passage du clip dans l'ouverture et qui reprend sa forme après, par exemple, un acier qui présente des propriétés de plasticité, des plastiques, etc.... On peut utiliser, par exemple, de l'acier DC04 et S235JR, sinon tous types de matériaux ayant un bon compromis entre élasticité (souplesse des clips) et rigidité (tenue de la forme des pièces)

Un clip sera par exemple réalisé en découpant dans une tôle la forme souhaitée et la partie découpée sur au moins trois côtés sera mise en forme pour obtenir un « S » allongé.

L'exemple donné ci-dessus fait intervenir une coque ou enveloppe ou encore pièce comprenant un fond et quatre parois. Les moyens de verrouillage peuvent être disposés sur une ou plusieurs des parois d'une pièce.

L'exemple donné ci-dessus montre une coque supérieure équipée de moyens de fermeture et une coque inférieure équipée d'ouvertures. Sans sortir du cadre de l'invention, on peut appliquer l'invention à deux parties quelque soit leur positionnement dans l'espace, et quelque soit la direction de mouvement permettant l'insertion des clips dans les ouvertures. De préférence, le dispositif possédera deux fois deux clips pour garantir un bon assemblage.

Le système selon l'invention est une solution simple pour assembler deux pièces, de façon à ce qu'elles ne puissent être démontées, avec un seul mouvement de translation. C'est une solution peu onéreuse, utilisable dans différents domaines techniques, avec un faible volume.

## Revendications

1. Système non démontable comprenant au moins une première pièce (20) et une deuxième pièce (10) **caractérisé en ce que** :
• la première pièce (20) comporte au moins deux ouvertures (21i),
• la deuxième pièce (10) comporte au moins deux moyens de verrouillage (11, 12), un moyen de verrouillage (11, 12) est composé d'une partie (11a, 11b, 11c; 12a, 12b, 12c) ayant une forme de « S » allongé, la dimension d'un moyen de verrouillage étant adaptée à une ouverture (21i) dans laquelle il va s'insérer au cours d'un mouvement de translation de la première pièce (20) par rapport à la deuxième pièce (10), une branche (11a, 11b) du premier moyen de verrouillage étant disposée d'un côté d'une ligne (As) et une branche (12a, 12b) du deuxième moyen de verrouillage étant disposée du côté opposé par rapport à cette ligne, afin d'assurer le blocage des deux pièces en position de verrouillage, les moyens de verrouillage étant à l'intérieur du volume formé par les deux pièces assemblées et inaccessibles de l'extérieur.

2. Système non démontable selon la revendication 1 **caractérisé en ce que** la première pièce (20) est une coque comprenant un repli de maintien (22) et **en ce que** la deuxième pièce (10) est une coque comprenant sur au moins une de ses parois au moins deux moyens de verrouillage.

3. Système non démontable selon l'une des revendications 1 à 2 **caractérisé en ce que** la deuxième pièce est une coque comprenant une paroi (10p) comprenant une bande (10_{b}), au moins deux pattes (30) solidaires de la bande (10_{b}), deux pattes étant séparées d'une distance dc, chacune des pattes comprenant un évidement (40) afin de former un clip (11, 12).

4. Système non démontable selon la revendication 3 **caractérisé en ce que**:
• chaque patte (30) comprenant un bord droit (30_{d}), un bord gauche (30_{g}), un bord inférieur (30ᵢ), un bord supérieur (30ₛ),
• chaque évidement (40) en forme de « U » à l'envers délimité par premier bord supérieur (40ₛ), un bord inférieur (40ᵢ) suivant la forme des branches du U, un premier bord droit (40_{d}), un deuxième bord milieu droit (40_{dm}), un premier bord gauche (40_{g}), un deuxième bord milieu gauche (40_{gm}).

## Patentansprüche

1. Nicht demontierbares System, das wenigstens eine erste Komponente (20) und eine zweite Komponente (10) umfasst, **dadurch gekennzeichnet, dass**:
• die erste Komponente (20) wenigstens zwei Öffnungen (21i) aufweist,
• die zweite Komponente (10) wenigstens zwei Verriegelungsmittel (11, 12) umfasst, wobei ein Verriegelungsmittel (11, 12) aus einem Teil (11a, 11b, 11c; 12a, 12b, 12c) mit einer länglichen "S"-Form zusammengesetzt ist, wobei die Abmessung von einem Verriegelungsmittel an eine Öffnung (21i) angepasst ist, in die im Laufe einer Translationsbewegung der ersten Komponente (20) mit Bezug auf die zweite Komponente (10) ein Schenkel (11a, 11b) des ersten Verriegelungsmittels, der auf einer Seite einer Linie (As) angeordnet ist, und ein Schenkel (12a, 12b) des zweiten Verriegelungsmittels eingeführt wird, der auf der gegenüberliegenden Seite mit Bezug auf diese Linie angeordnet ist, um die Sperrung der beiden Teile in der Verriegelungsposition zu gewährleisten, wobei sich die Verriegelungsteil im Innern des Volumens befinden, das durch die zwei Komponenten gebildet wird, die zusammengefügt und von außen nicht zugänglich sind.

2. Nicht demontierbares System nach Anspruch 1, **dadurch gekennzeichnet, dass** die erste Komponente (20) eine Schale ist, die einen Haltefalz (22) aufweist, und dadurch, dass die zweite Komponente (10) eine Schale ist, die an wenigstens einer ihrer Wände wenigstens zwei Verriegelungsmittel umfasst.

3. Nicht demontierbares System nach einem der Ansprüche 1 bis 2, **dadurch gekennzeichnet, dass** die zweite Komponente eine Schale ist, die eine ein Band (10b) umfassende Wand (10p), wenigstens zwei Klauen (30) einstückig mit dem Band (10b) umfasst, wobei zwei Klauen um einen Abstand dc voneinander getrennt sind, wobei jede der Klauen eine Aussparung (40) aufweist, um eine Klammer (11, 12) zu bilden.

4. Nicht demontierbares System nach Anspruch 3, **dadurch gekennzeichnet, dass**:
• jede Klaue (30) einen rechten Rand (30d), einen linken Rand (30g), einen unteren Rand (30i), einen oberen Rand (30s) umfasst,
• jede Aussparung (40) in Form eines umgekehrten "U" durch einen ersten oberen Rand (40s), einen unteren Rand (40i), der der Form der Schenkel des U folgt, einen ersten rechten Rand (40c), einen zweiten rechten Mittelrand (40dm), einen ersten linken Rand (40g), einen zweiten linken Mittelrand (40gm) begrenzt wird.

## Claims

1. Non-demountable system comprising at least a first part (20) and a second part (10), **characterized in that**:
• the first part (20) comprises at least two openings (21ᵢ),
• the second part (10) comprises at least two interlocking means (11, 12), an interlocking means (11, 12) is composed of a part (11a, 11b, 11c; 12a, 12b, 12c) of elongate "S" shape, the dimension of an interlocking means being adapted to the opening (21ᵢ) in which it is inserted during a movement in translation of the first part (20) relative to the second part (10), a branch (11a, 11b) of the first interlocking means being disposed on one side of a line (As) and one branch (12a, 12b) of the second interlocking means being disposed on the opposite side of said line, in order to immobilize the two parts in the interlocking position, the interlocking means being inside the volume formed by the two parts when assembled and inaccessible from the outside.

2. Non-demountable system according to Claim 1 **characterized in that** the first part (20) is a shell comprising a bent retaining rim (22) and **in that** the second part (10) is a shell comprising on at least one of its walls at least two interlocking means.

3. Non-demountable system according to either one of Claims 1 and 2 **characterized in that** the second part is a shell comprising a wall (10ₚ) comprising a strip (10_{b}), at least two lugs (30) attached to the strip (10_{b}), two lugs being separated by a distance d_{c}, each of the lugs comprising an aperture (40) in order to form a clip (11, 12).

4. Non-demountable system according to Claim 3 **characterized in that**:
• each lug (30) comprising a right-hand edge (30_{d}), a left-hand edge (30_{g}), a lower edge (30ᵢ), an upper edge (30ₛ),
• each aperture (40) of inverted "U" shape delimited by a first upper edge (40ₛ), a lower edge (40ᵢ) following the shape of the branches of the U, a first right-hand edge (40_{d}), a second middle right-hand edge (40_{dm}), a first left-hand edge (40_{g}), a second left-hand middle edge (40_{gm}).
